# EUROPÄISCHE PATENTSCHRIFT

(11) **EP 0 645 408 B1**
(45) Veröffentlichungstag und Bekanntmachung des Hinweises auf die Patenterteilung: **03.01.2001**
(21) Anmeldenummer: 94113887.7
(22) Anmeldetag: 05.09.1994
(51) Int. Cl.: C08G 14/06, C08L 63/00, C08L 61/34

(54) **Härtungskomponente für Epoxidharze**
Curing agent for epoxy resins
Agent de durcissement pour résines époxydes

(30) Priorität: 13.09.1993 DE 4331052
(43) Veröffentlichungstag der Anmeldung: 29.03.1995
(73) Patentinhaber: HOECHST AKTIENGESELLSCHAFT, 65926 Frankfurt am Main (DE)
(72) Erfinder: Neumann, Uwe, Dr., D-65307 Bad Schwalbach (DE); Godau, Claus, D-65399 Kiedrich (DE)
(74) Vertreter: Zounek, Nikolai, Dipl.-Ing.

(56) Entgegenhaltungen:
- EP-A- 0 541 814
- GB-A- 886 767
- US-A- 2 354 672
- US-A- 4 172 042
- US-A- 5 098 986

## Beschreibung

Die vorliegende Erfindung betrifft eine Härtungskomponente für Epoxidharze sowie deren Verwendung in härtbaren Mischungen.

Die GB-A 886 767 beschreibt ein Verfahren zur Härtung von Epoxidharzen, wobei das zu härtende Harz mit einem Reaktionsprodukt aus einem Phenol (1), Formaldehyd (2) und einem aliphatischen Amin (3) oder Mischungen mehrerer solcher umgesetzt wird. Die Herstellung des Härtungsmittels erfolgt durch Umsetzen in wäßriger Lösung von (1), (2) und (3), oder durch Umsetzen von (1) mit einem Reaktionsprodukt von (2) und (3).

Es ist bekannt, daß Alkohole, insbesondere Phenol oder alkylierte Phenole, die Härtungsreaktion zwischen Oxiranen und Aminogruppen beschleunigen (vgl. US-A 3 366 600 und DE-A 17 70 832). Dabei hat es sich als vorteilhaft erwiesen, die Phenolkomponente zusammen mit der Aminkomponente in einem Molekül zu vereinigen. In DE-A 15 43 754 wird dazu eine Hydroxyaryl-substituierte aliphatische Carbonsäure mit einem Polyamin über eine Amid-Bindung verknüpft. Bei diesem Verfahren geht jedoch eine Aminogruppe des Polyamins, die für die Amid-Bindung benötigt wird, für den Härtungsvorgang verloren.

DE-A 32 33 565 und EP-B 0 114 875 schlagen daher als Härtungskomponente das Reaktionsprodukt einer Mannich-Reaktion von Aldehyden und Polyaminen mit Phenol oder Alkylphenolen, beispielsweise Kresolen, p-tert.-Butylphenol oder Nonylphenol vor, EP-A 0 066 447 auch mit Arylphenolen, beispielsweise Benzylphenol vor.

Diese Kombinationen haben sich durchaus bewährt, zeigen jedoch auch Nachteile, wie zum Teil mangelnde Beschleunigung bei tiefen Temperaturen (≤ 10 °C) und bei hoher Luftfeuchtigkeit, sowie mangelnde Beständigkeit gegen verdünnte organische Säuren, beispielsweise Essigsäure. Da in allen diesen Kombinationen Phenol oder alkylierte Phenole enthalten sind, sind sie zudem aus toxikologischer Sicht aufgrund der Gefährdung des Anwenders bei der Applikation nur bedingt einsatzfähig. Darüber hinaus werden die Phenole beispielsweise bei Kontakt mit Nahrungsmitteln durch die darin enthaltenen wäßrig-verdünnten organischen Säuren wie Essigsäure, Weinsäure oder Zitronensäure leicht aus der Beschichtung extrahiert und verderben das Nahrungsmittel.

In DE-B 10 43 629 sind neben den üblichen phenolischen Komponenten auch mehrwertige Phenole als mögliche Reaktanden für durch Mannich-Reaktion herstellbare Härtungskomponenten genannt. Verbindungen wie Resorcin und Hydrochinon liefern aufgrund ihrer hohen Reaktivität aber stark vernetzte Mannich-Basen mit unerwünscht hoher Viskosität. Die gegenüber den einwertigen phenolischen Komponenten erhöhte Polarität der mehrwertigen Phenole verursacht darüber hinaus ein stärkeres Weißanlaufen von aus mehrwertige Phenole enthaltenden härtbaren Mischungen hergestellten Beschichtungen.

Es besteht daher das Bedürfnis nach Härtungssystemen für Epoxidharze, deren beschleunigend wirkende Gruppen zu einem hohen Anteil in das Netzwerk eingebaut werden, so daß ihre Extraktion durch wäßrig-verdünnte organische Säuren weitgehend vermieden wird und die darüber hinaus auch bei tiefen Temperaturen und hoher Luftfeuchtigkeit genügend reaktiv sind. Um den Problemen, die insbesondere beim Beschichten bei tiefen Temperaturen und hoher Luftfeuchtigkeit auftreten, wie Weißanlaufen, schmierigen Oberflächen und unge-nügender Vernetzung, die auf die Reaktion der Aminogruppen im Härtungsmittel mit Wasserdampf und, Kohlendioxid aus der Luft zurückzuführen sind, zu begegnen, wird eine relativ niedrige Viskosität und ein hydrophobes Verhalten der Härtungskomponente gefordert.

Gegenstand der Erfindung ist nun eine Aminogruppen-haltige Härtungskomponente für Verbindungen, die Oxirangruppen enthalten, üblicherweise als Epoxidharz bezeichnet, erhältlich durch Umsetzung von alkylierten Polyhydroxyaromaten (A) mit Polyaminen (B) und Aldehyden (C) nach dem Mechanismus der Mannich-Reaktion, dadurch gekennzeichnet, daß
- die alkylierten Polyhydroxyaromaten (A) mindestens zwei Hydroxylgruppen aufweisen, die jeweils mit einem aromatischen Ring verbunden sind, und aus einem entsprechenden Polyhydroxyaromaten (a1) und einer ungesättigten Verbindung (a2), die mindestens eine olefinische Doppelbindung trägt, durch Säurekatalyse herstellbar sind;
- die Polyamine (B) ausgewählt sind aus Aminen mit mindestens zwei primären aliphatischen Aminogruppen, Polyamidoaminen, Polyalkylenoxidpolyaminen und Epoxidharz-Amin-Addukten; und
- die Umsetzung so erfolgt, daß die Schmelze des alkylierten Polyhydroxyaromaten (A) bei 100 bis 140 °C von dem Polyamin (B) aufgenommen wird, und anschließend bei 70 bis 120 °C der Aldehyd (C) zugefügt wird.

Weiterhin betrifft die Erfindung die Verwendung der Härtungskomponente in härtbaren Mischungen, insbesondere Lackzubereitungen sowie härtbare Mischungen, welche die Härtungskomponente enthalten.

Bei der erfindungsgemäßen Härtungskomponente handelt es sich um das Reaktionsprodukt aus einem alkylierten Polyhydroxyaromaten (A) mit Polyaminen (B) und Aldehyden (C), das nach dem Mechanismus der Mannichreaktion hergestellt wird.

Als alkylierter Polyhydroxyaromat (A) sind erfindungsgemäß Verbindungen geeignet, die aus einem entsprechenden Polyhydroxyaromaten (a1) und einer ungesättigten Verbindung (a2), die mindestens eine olefinische Doppelbindung trägt, durch Säurekatalyse herstellbar sind.

Durch die Alkylierung wird die Viskosität der Härtungskomponente verringert und das Vermögen, die beschleunigende Komponente (A) aus der Beschichtung mit verdünnter wäßriger Säure herauszulösen, aufgrund der Zunahme des hydrophoben Charakters und eines weitgehenden Einbaus in das Netzwerk stark herabgesetzt. Darüber hinaus erhält man selbst unter kritischen Bedingungen, wie hoher Luftfeuchtigkeit und tiefen Temperaturen, schon nach 24 Stunden durchgehärtete Filme mit gutem Glanz und Verlauf.

Unter dem Begriff Polyhydroxyaromat (a1) sind Verbindungen zu verstehen, die mindestens zwei Hydroxylgruppen an einem aromatischen Ring tragen, beispielsweise am Benzolring. Bevorzugt sind dabei Hydrochinon, Brenzcatechin, Resorcin, Pyrogallol, Phloroglucin und Novolake aus oben genannten Polyhydroxyaromaten mit Formaldehyd. Ganz besonders bevorzugt sind Resorcin sowie Novolake auf Basis von Resorcin und Formaldehyd. Das Molverhältnis von Resorcin zu Formaldehyd beträgt dabei vorzugsweise 2,0 zu 5,0 bis 2,0 zu 1,0.

Die Polyhydroxyaromaten können dabei einzeln oder im Gemisch eingesetzt werden.

Als ungesättigte Verbindungen (a2) kommen beispielsweise in Frage: Olefine, wie 1-Hexen, 1-Hepten, deren höhere Homologe und deren Isomere, sowie Cyclohexen, Cyclopentadien, Inden, Styrol, o/m/p-Vinyltoluol, 2-Phenylpropen, 1,3-Divinylbenzol, 1,3-Bis-(2-propenyl)-benzol, bevorzugt sind Inden, Styrol und 2-Phenylpropen. Die ungesättigten Verbindungen können einzeln oder im Gemisch eingesetzt werden.

Der alkylierte Polyhydroxyaromat (A) wird bevorzugt aus der ungesättigten Verbindung (a2) und dem Polyhydroxyaromaten (a1) durch Säurekatalyse in der Schmelze hergestellt. Das Molverhältnis der Komponenten (a1) und (a2) beträgt dabei im allgemeinen 1,0 zu 0,1 bis 1,0 zu 3,0, vorzugsweise 1,0 zu 0,8 bis 1,0 zu 1,8 insbesondere 1,0 zu 1,0 mol bis 1,0 zu 1,75 mol. Die Temperatur bei der Synthese liegt bei 80 °C bis 220 °C, besonders bevorzugt wird ein Bereich von 120 °C bis 160 °C. Die Säuren, die den oben beschriebenen Prozeß katalysieren, sind die bekannten Katalysatoren für die Friedel-Crafts-Alkylierung, beispielsweise konzentrierte Schwefelsäure, p-Toluolsulfonsäure, Bortrifluorid-Etherkomplexe, oder auch andere Bortrifluorid-Komplexe, Zinn-IV-chlorid, 85%ige Phosphorsäure und Oxalsäure. Die Konzentration der katalysierenden Säure, bezogen auf die Gesamtmenge an (a1) und (a2) beträgt vorzugsweise 0,01 bis 5 Gewichtsprozent. Der Herstellprozeß wird beispielsweise so durchgeführt, daß der Polyhydroxyaromat (a1) mit dem Katalysator vorgelegt wird und die ungesättigte Verbindung (a2) bei der oben angegebenen Temperatur hinzudosiert wird. Ein Verfahren zur Herstellung von alkylierten Polyhydroxyaromaten (A) ist beispielsweise in EP-A 0 319 310 beschrieben.

Bei Verwendung von Novolaken können diese in einer Vorstufe separat hergestellt werden oder parallel zur Alkylierung, indem man zusätzlich zur ungesättigten Verbindung (a2) eine Formalinlösung zur Reaktionsmischung gibt.

Eine Reaktion zur Herstellung derartiger Novolake ist beispielsweise in US-A 5 049 641 beschrieben.

Vorzugsweise finden folgende alkylierte Polyhydroxyaromaten (A) Verwendung: Umsetzungsprodukte aus Styrol und Resorcin, 2-Phenylpropen und Resorcin, Dodecen und Resorcin, Inden und Resorcin, aus Styrol und Brenzcatechin, 2-Phenylpropen und Brenzcatechin, Hexen und Brenzcatechin, Inden und Brenzcatechin, Mischalkylierungsprodukte aus Styrol, Dodecen und Resorcin, aus Styrol, Divinylbenzol und Resorcin, aus Inden, Styrol und Resorcin, aus Inden, Dodecen und Resorcin, aus Styrol, Formaldehyd und Resorcin, aus 2-Phenylpropen, Dodecen und Resorcin, aus 2-Phenylpropen, Inden und Resorcin, aus Styrol, Dodecen und Brenzcatechin, aus Styrol, Divinylbenzol und Brenzcatechin, aus Inden, Styrol und Brenzcatechin, aus Inden, Dodecen und Brenzcatechin, aus 2-Phenylpropen, Dodecen und Brenzcatechin, aus 2-Phenylpropen, Inden und Brenzcatechin, miteinander umgesetzt in den oben genannten Mol-Verhältnissen.

Das Polyamin (B) zeichnet sich dadurch aus, daß es mindestens zwei primäre, aliphatische (= lineare, verzweigte oder cyclische aliphatische) Aminogruppen trägt. Es kann noch weitere Aminogruppen mit primärem, sekundärem oder tertiärem Charakter tragen. Weiterhin kommen auch Polyaminoamide sowie Polyalkylenoxidpolyamine oder Amin-Addukte, wie Amin-Epoxidharz-Addukte in Betracht.

Beispiele für geeignete Polyamine sind: 1,2-Diaminoethan, 1,2-Diaminopropan, 1,3-Diaminopropan, 1,4-Diaminobutan und höhere Homologe, sowie 2-Methyl-1,5-diaminopentan, 1,3-Diaminopentan, 2,2,4-Trimethyl-1,6-diaminohexan, 2,4,4-Trimethyl-1,6-diaminohexan, 1-Amino-3-aminomethyl-3,5,5-trimethylcyclohexan, 2,2-Dimethyl-1,3-diaminopropan, 1,3-Bis(aminomethyl)cyclohexan, 1,2-Diaminocyclohexan, 1,3-Bis(aminomethyl)benzol, Bis(4-aminocyclohexyl)-methan, Bis(4-amino-3-methylcyclohexyl)methan, 3-Azapentan-1,5-diamin, 4-Azaheptan-1,7-diamin, 3,6-Diazaoctan-1,8-diamin, 3(4),8(9)-Bis(aminometyl)tricyclo[5.2.1.O^{2,6}]-decan, 3-Methyl-3-azapentan-1,5-diamin, Jeffamine ^{®} D-230, Jeffamine ^{®} D-400, Jeffamine^{®} T-403 (Produkte der Texaco Chemical Company) und 2-Butyl-2-ethyl-1,5-diaminopentan. Bevorzugt sind araliphatische Polyamine, bei denen die aliphatischen C-Atome die Aminogruppen tragen, wie 1,3-Bis(aminomethyl)benzol und Gemische aus 1,3-Bis(aminomethyl)benzol und anderen Polyaminen.

Als Aldehyd (C) kommen im allgemeinen primäre aliphatische Aldehyde zum Einsatz, beispielsweise Acetaldehyd, Propionaldehyd und Isobutyraldehyd und vorzugsweise Formaldehyd.

Die Mannichreaktion des alkylierten Polyhydroxyaromaten (A) mit dem Polyamin (B) und dem Aldehyd (C) verläuft nach allgemein bekannten Verfahren (vgl. EP-B 0 114 875, EP-A 0 066 447, DE-A 32 33 565 und DE-C 20 25 343). Dabei wird die Schmelze des alkylierten Polyhydroxyaromaten (A) vorzugsweise bei 100 bis 140 °C vom Polyamin (B) aufgenommen. Vorzugsweise bei 70 bis 120 °C, insbesondere bei 90 bis 110 °C, wird dann eine vorzugsweise 30 bis 44%ige Formalinlösung portionsweise hinzugefügt unter gleichzeitigem Abdestillieren von Wasser. Anschließend erfolgt eine Destillation des Restwassers unter vermindertem Druck (typisch 50 bis 200 mbar), vorzugsweise bei 100 bis 130 °C. Das Molverhältnis der Komponenten (A), bezogen auf eingesetzte Mole Polyhydroxyaromat (a1), zu (B) beträgt vorzugsweise 0,1 zu 2,0 bis 2,0 zu 1,0, insbesondere 0,2 zu 1,0 bis 0,75 zu 1,0. Das Verhältnis der Komponenten Polyamin (B) zu Aldehyd (C) beträgt vorzugsweise 1,0 zu 0,1 bis 1,0 zu 2,0, insbesondere 1,0 zu 0,2 bis 1,0 zu 0,5.

Der erfindungsgemäßen Härtungskomponente können zusätzlich noch primäre, aliphatische Monoamine zugefügt werden. Solche Monoamine sind beispielsweise unverzweigte 1-Aminoalkane mit einem Alkylrest aus sechs bis achtzehn Kohlenstoffatomen. Die höheren Vertreter dieser Verbindungsklasse werden auch Fettamine genannt. Aber auch Monoamine mit verzweigten Ketten kommen in Betracht, beispielsweise 2-Ethylhexan-1-amin oder 3,5,5-Trimethylhexan-1-amin. Sie können dabei einzeln oder im Gemisch eingesetzt werden und zwar zusammen vorzugsweise zu 0,1 bis 10 Gewichtsprozent bezogen auf die oben beschriebene Mannichbase, insbesondere zu 1 bis 5 Gewichtsprozent.

Der Zusatz derartiger primärer aliphatischer Monoamine verringert weiter die Gefahr des Weißanlaufens, insbesondere bei Verwendung der erfindungsgemäßen härtbaren Mischungen zur Herstellung von Beschichtungen bei tiefer Temperatur.

Die erfindungsgemäße Härtungskomponente wird verwendet zur Herstellung von härtbaren Mischungen, insbesondere Lackzubereitungen.

Die erfindungsgemäßen härtbaren Mischungen enthalten die erfindungsgemäße Härtungskomponente, ein Epoxidharz, gegebenenfalls ein Verdünnungsmittel, das sich unter den erfindungsgemäßen Bedingungen gegenüber Amin und Epoxid inert verhält, sowie gegebenenfalls übliche Zusatzstoffe.

Als Verdünnungsmittel seien beispielsweise genannt:
Ether, wie Dibenzylether, Tetrahydrofuran, 1,2-Dimethoxyethan oder Methoxybenzol; Ketone, wie Butanon, Cyclohexanon, Methylisobutylketon und ähnliche; Alkohole, wie Methanol, Ethanol, 2-Propanol, Benzylalkohol, Furfurylalkohol und andere; Kohlenwasserstoffe, wie Toluol, Xylol, Heptan, Gemische aus aliphatischen und aromatischen Kohlenwasserstoffen mit einem Siedebereich über 100 °C bei Normaldruck, sowie niedrig viskose Cumaron-Inden-Harze oder Xylol-Formaldehyd-Harze. Bevorzugt sind dabei aliphatische Alkohole mit einem Phenylrest, wie Benzylalkohol, 1-Phenoxypropan-2,3-diol, 3-Phenyl-1-propanol, 2-Phenoxy-1-ethanol, 1-Phenoxy-2-propanol, 2-Phenoxy-1-propanol, 2-Phenylethanol, 1-Phenyl-1-ethanol oder 2-Phenyl-1-propanol. Die Verdünnungsmittel können dabei einzeln oder im Gemisch eingesetzt werden.

Als übliche Zusatzstoffe, die in Abhängigkeit von dem jeweiligen Verwendungszweck zusätzlich in der erfindungsgemäßen härtbaren Mischung vorhanden sein können, seien die üblichen Lackadditive wie Pigmente, Pigmentpasten, Antioxidantien, Verlauf- beziehungsweise Verdickungsmittel, Entschäumer, Katalysatoren, zusätzliche Härter und zusätzliche härtbare Verbindungen genannt. Diese Additive können der Mischung gegebenenfalls erst unmittelbar vor der Verarbeitung zugegeben werden.

Zur Herstellung der erfindungsgemäßen härtbaren Mischungen wird die erfindungsgemäße Härtungskomponente mit dem Epoxidharz sowie gegebenenfalls dem Verdünnungsmittel und den üblichen Zusatzstoffen gemischt. Bei Komponenten mit niedriger Viskosität kann auf das Verdünnungsmittel verzichtet werden und die Mischung in Substanz erfolgen, wobei gegebenenfalls auf höhere Temperaturen erwärmt wird. Produkte höherer Viskosität werden vor der Mischung in den erwähnten Verdünnungsmitteln gelöst oder dispergiert.

Jedes bekannte Epoxidharz kann durch die erfindungsgemäße Härtungskomponente gehärtet werden, beispielsweise solche auf Basis von 2,2-Bis(4-hydroxyphenyl)propan, Bis(hydroxyphenyl)methan, Polypropylenglykolen, Novolaken aus Phenol, Kresolen, p-tert.-Butylphenol, Nonylphenol und Formaldehyd, jedes für sich allein oder im Gemisch, sowie mit sogenannten Reaktivverdünnern verdünnte Harze. Reaktivverdünner sind beispielsweise die Glycidylether folgender Alkohole: 1,6-Hexandiol, 1,4-Butandiol, p-tert.-Butylphenol, o-Kresol, Phenol und geradkettige Monoalkohole mit mehr als acht Kohlenstoffatomen. Auch feste Epoxidharze, auf Basis der oben genannten Phenole, lassen sich mit der erfindungsgemäßen Härtungskomponente härten, sofern sie vorher in einem geeigneten Lösemittel gelöst werden. Eine ausführliche Aufzählung der geeigneten Epoxidverbindungen findet sich in den Handbüchern "Epoxidverbindungen und Harze" von A.M. Paquin, Springer Verlag, Berlin 1958, Kapitel IV und "Handbook of Epoxy Resins" von H.Lee, K.Neville, McGraw-Hill Book Company, New York 1982 Reissue, sowie "Epoxy Resins - Chemistry and Technology" von C.A. May, Marcel Dekker, Inc. New York and Basel 1988.

Die erfindungsgemäßen härtbaren Mischungen können wegen ihrer günstigen Eigenschaften, vor allem wegen der raschen Trocknung, auch bei tiefen Temperaturen und auch bei hoher Luftfeuchtigkeit unter Einbau des Härters in das Netzwerk vielseitige technische Anwendungen finden, beispielsweise zur Herstellung von Formkörpern (Gießharze) für den Werkzeugbau oder zur Herstellung von Überzügen und/oder Zwischenbeschichtungen auf vielerlei Substraten, beispielsweise auf solchen organischer oder anorganischer Natur, wie Holz, Holzfaserstoffen (Holzversiegelung), Textilien natürlicher oder synthetischer Herkunft, Kunststoffen, Glas, Keramik, Baustoffen, wie Beton, Faserplatten, Kunststeinen, insbesondere jedoch auf Metall. Weiterhin können die erfindungsgemäßen Mischungen als Bestandteile von Klebern, Kitten, Laminierharzen, Kunstharzelementen und insbesondere als Bestandteile von Anstrichmitteln und Lacken von Industriegegenständen, Haushaltsgeräten, Möbeln sowie im Bauwesen, wie beispielsweise Kühlgeräten, Waschmaschinen, Elektrogeräten, Fenstern, Türen eingesetzt werden. Das Aufbringen kann beispielsweise durch Streichen, Sprühen, Tauchen und dergleichen erfolgen. Ein bevorzugtes Anwendungsgebiet für die erfindungsgemäßen Mischungen sind die Lackzubereitungen.

Die Härtung der erfindungsgemäßen Mischungen läuft sehr rasch ab und erfolgt im allgemeinen bei -10 °C bis +50 °C, vorzugsweise 0 °C bis 40 °C. Beispielsweise erhält man bei +5 °C und einer relativen Luftfeuchtigkeit von 95% nach 8 bis 24 Stunden oder bei Raumtemperatur nach 1 bis 4 Stunden bereits Produkte mit guter Härte. Hervorzuheben ist die Frühwasserbeständigkeit, beispielsweise nach 24 Stunden Härtung bei +5 °C und einer relativen Luftfeuchtigkeit über 90 %.

### I. Herstellung der Härtungskomponente (A)

In den nachfolgenden Beispielen bedeuten Prozent jeweils Gewichtsprozent und Teile jeweils Gewichtsteile. HAV bedeutet Wasserstoff-Äquivalentgewicht. Dieser Wert, die Aminzahl und die Ausbeute sind in den nachfolgenden Beispielen immer auf das Gemisch von Härtungskomponente einschließlich Zusatzstoffen bezogen.

### Beispiel 1

110 Teile Resorcin werden mit 2 Teilen p-Toluolsulfonsäure-Monohydrat auf 130 °C erwärmt. Bei dieser Temperatur werden innerhalb von 60 Minuten 104 Teile Styrol hinzugefügt. Anschließend wird noch 120 Minuten auf 150 °C erhitzt. Nach Abkühlen auf 120 °C wird die Schmelze mit 270 Teilen 1,3-Bis(aminomethyl)-benzol und 30 Teilen Trimethylhexan-1,6-diamin, ein kommerziell erhältliches Gemisch aus 2,2,4-Trimethyl-1,6-diaminohexan und 2,4,4-Trimethyl-1,6-diaminohexan (Hüls AG) aufgenommen. Bei 90 bis 95 °C werden 41,5 Teile einer 36,5%igen Formalinlösung innerhalb von 90 Minuten tropfenweise hinzugefügt. Nach Ende der Zugabe wird 120 Minuten auf 105 °C gehalten. Unter steigendem Vakuum wird bei 110 °C Wasser abdestilliert. Sobald 5000 Pa (50 mbar) erreicht werden, erhöht man die Temperatur auf 130 °C und hält 60 Minuten unter 5000 Pa (50 mbar). Abschließend wird mit 65 Teilen 3-Phenylpropan-1-ol und 20 Teilen ^{®}Armeen OD (Oleylamin / Akzo Chemicals) aufgenommen.

| | |
|---|---|
| Aminzahl | 409 |
| HAV | 73 |
| Viskosität bei 25 °C | 1.900 mPa·s |

### Beispiel 2

90 Teile Resorcin und 20 Teile 1,5-Dihydroxynaphthalin werden mit 2 Teilen p-Toluolsulfonsäure-Monohydrat auf 130 °C erwärmt. Bei dieser Temperatur werden innerhalb von 60 Minuten 130 Tle 2-Propenylbenzol hinzugefügt. Anschließend wird noch 120 Minuten auf 150 °C erhitzt. Nach Abkühlen auf 120 °C wird die Schmelze mit 370 Teilen 1,3-Bis(aminomethyl)benzol aufgenommen. Bei 90 bis 95 °C werden 53 Teile einer 36,5%ige Formalinlösung innerhalb von 90 Minuten tropfenweise hinzugefügt. Nach Ende der Zugabe wird 120 Minuten auf 105 °C gehalten. Unter steigendem Vakuum wird bei 110 °C Wasser abdestilliert. Sobald 5000 Pa (50 mbar) erreicht werden, erhöht man die Temperatur auf 130 °C und hält 60 Minuten unter 5000 Pa (50 mbar). Abschließend wird mit 12 Teilen ^{®}Genamin CC100D (C₁₂-Fettamin / HOECHST AG) und 75 Teilen Benzylalkohol aufgenommen.

| | |
|---|---|
| Aminzahl | 438 |
| HAV | 68 |
| Viskosität bei 25 °C | 2.100 mPa·s |

### Beispiel 3

110 Teile Resorcin werden mit 5 Teilen Oxalsäure auf 130 °C erwärmt. Bei dieser Temperatur werden innerhalb von 60 Minuten 150 Teile 2-Propenylbenzol hinzugefügt. Anschließend wird noch 120 Minuten auf 150 °C erhitzt. Nach Abkühlen auf 120 °C wird die Schmelze mit 365 Teilen 1,3-Bis(aminomethyl)benzol aufgenommen. Bei 90 bis 95 °C werden 45 Teile einer 36,5%ige Formalinlösung innerhalb von 90 Minuten tropfenweise hinzugefügt. Nach Ende der Zugabe wird 120 Minuten auf 105 °C gehalten. Unter steigendem Vakuum wird bei 110 °C Wasser abdestilliert. Sobald 5000 Pa (50 mbar) erreicht werden, erhöht man die Temperatur auf 130 °C und hält 60 Minuten unter 5000 Pa (50 mbar). Abschließend wird mit 2 Teilen ^{®}Lipinol T (benzyliertes Toluol / Hüls AG), 23 Teilen n-Octylamin und 90 Teilen 3-Phenylpropanol aufgenommen.

| | |
|---|---|
| Aminzahl | 413 |
| HAV | 72 |
| Viskosität bei 25 °C | 1.400 mPa·s |

### Beispiel 4

102 Teile Resorcin und 8 Teile Hydrochinon werden mit 5 Teilen Oxalsäure auf 130 °C erwärmt. Bei dieser Temperatur werden innerhalb von 60 Minuten ein Gemisch aus 125 Teilen Styrol und 16 Teilen 1,3-Bis(2-propylen)benzol hinzugefügt. Anschließend wird noch 120 Minuten auf 150 °C erhitzt. Nach Abkühlen auf 120 °C wird die Schmelze mit 310 Teilen 1,3-Bis(aminomethyl)benzol und 20 Teilen Trimethylhexan-1,6-diamin, einem kommerziell erhältlichen Gemisch aus 2,2,4-Trimethyl-1,6-diaminohexan und 2,4,4-Trimethyl-1,6-diaminohexan (Hüls AG), aufgenommen. Bei 90 bis 95 °C werden 65 Teile einer 36,5%igen Formalinlösung innerhalb von 90 Minuten tropfenweise hinzugefügt. Nach Ende der Zugabe wird 120 Minuten auf 105 °C gehalten. Unter steigendem Vakuum wird bei 110 °C Wasser abdestilliert. Sobald 5000 Pa (50 mbar) erreicht werden, erhöht man die Temperatur auf 130 °C und hält 60 Minuten unter 5000 Pa (50 mbar). Abschließend wird mit 66 Teilen Benzylalkohol und 20 Teilen n-Octylamin aufgenommen.

| | |
|---|---|
| Aminzahl | 404 |
| HAV | 81 |
| Viskosität bei 25 °C | 3.200 mPa·s |

### Beispiel 5

100 Teile Resorcin und 120 Teile Xylol werden mit 1 Teil Bortrifluorid-Essigsäure-Komplex auf 120 °C erhitzt. Bei dieser Temperatur gibt man gleichzeitig 24 Teile einer 36,5%igen Formalinlösung sowie 80 Teile Styrol hinzu. Nach Zugabe wird mittels,Xylol Wasser azeotrop abdestilliert. Mit 260 Teilen 1,3-Bis(aminomethyl)benzol wird neutralisiert. Unter azeotroper Abdestillation von Wasser erfolgt eine zweite Zugabe von 8 Teilen einer 36,5%igen Formalinlösung bei 90 bis 105 °C. Nach der Zugabe wird unter steigendem Vakuum bei maximal 120 °C Wasser und Xylol abdestilliert. Sobald 5000 Pa (50 mbar) erreicht werden, hält man 60 Minuten unter 5000 Pa (50 mbar).
Abschließend wird mit 16 Teilen Dodecylamin und 70 Teilen Benzylalkohol aufgenommen.

| | |
|---|---|
| Aminzahl | 412 |
| HAV | 69 |
| Viskosität bei 25 °C | 4.300 mPa·s |

### Vergleichshärter

V1: 1,3-Bis(aminomethyl)benzol (HAV 34)
V2: ^{®}Beckopox EH 629 (Mannichbase aus Phenol, enthält mehr als 10% freies Phenol HAV 70 / HOECHST AG).

### II. Herstellung der härtbaren Mischungen und anwendungstechnische Prüfung des Härtungsproduktes

Mit den unter I genannten Produkten und Vergleichsprodukten und einem Epoxidharz werden in folgender Weise Beschichtungen hergestellt, die anwendungstechnisch beurteilt werden. 100g eines niedermolekularen Epoxidharzes auf Basis Bisphenol A mit einer Viskosität von ca. 10 Pas / 25 °C und einem Epoxidäquivalent von 183 (^{®}Beckopox EP 140 / HOECHST AG) werden mit der dem Wasserstoffäquivalent entsprechenden Menge des jeweiligen Härters gemischt und zwei Filme von 200 µm Dicke auf jeweils zwei Glasplatten aufgezogen. Eine Platte wird 24 Stunden bei 23 °C und 40 bis 50% relativer Luftfeuchtigkeit gelagert, die andere Platte wird 24 Stunden bei +5 °C und >95% relativer Luftfeuchtigkeit aufbewahrt. Die Filme werden auf Klebrigkeit, Trübung, Härte und Wasserempfindlichkeit geprüft. Danach werden die beschichteten Platten 30 Minuten in ein Wasserbad (Wassertemperatur zwischen 10 und 15 °C) gestellt und nach dem Abtrocknen die Veränderung (Trübung) des Filmes sowie seine Härte beurteilt.

Wie aus Tabelle 1 ersichtlich ist, weisen die mit den erfindungsgemäßen Härtungsmitteln hergestellten Beschichtungen eine einwandfreie Oberflächenbeschaffenheit auf, während bei den Vergleichsbeispielen eine mehr oder weniger starke Trübung zu beobachten ist. Diese Trübung ist ein Indikator für weitere Nachteile, die die erfindungsgemäßen Härtungsmittel nicht aufweisen und damit deren technischen Fortschritt beweisen. Einmal wird durch die, die Trübung hervorrufende, Carbonat- bzw. Carbaminatbildung die Zwischenhaftung einer weiteren darauf aufgetragenen Schicht erheblich gestört. Zum anderen ist durch die Carbonat- bzw. Carbaminatbildung die Vernetzungsdichte im gehärteten Film und damit die Chemikalienbeständigkeit herabgesetzt, da sich Angriffspunkte für Chemikalien wie verdünnte organische Säuren bilden.

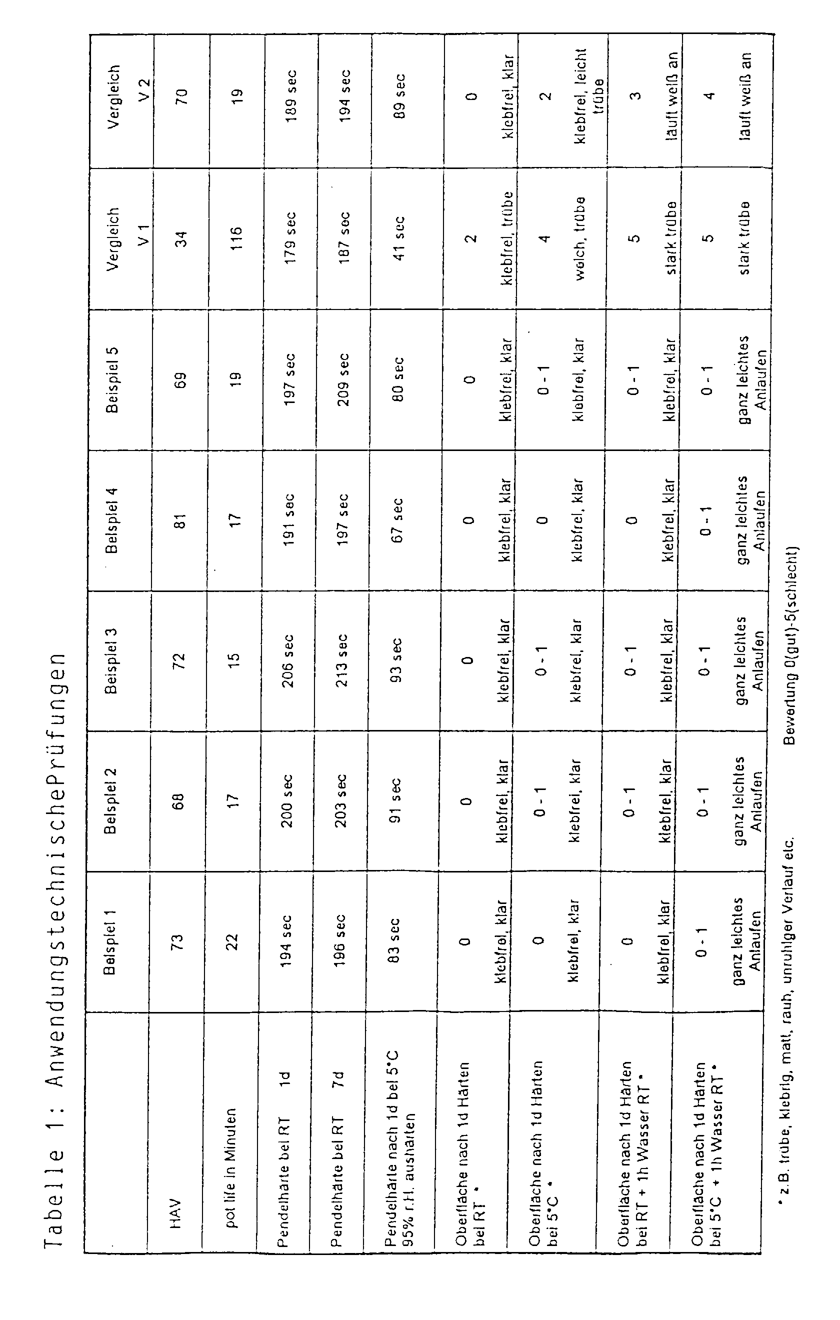

## Patentansprüche

1. Aminogruppen-haltige Härtungskomponente für Epoxidharze, erhältlich durch Umsetzung von alkylierten Polyhydroxyaromaten (A) mit Polyaminen (B) und Aldehyden (C) nach dem Mechanismus der Mannich-Reaktion, dadurch gekennzeichnet, daß
- die alkylierten Polyhydroxyaromaten (A) mindestens zwei Hydroxylgruppen aufweisen, die jeweils mit einem aromatischen Ring verbunden sind, und aus einem entsprechenden Polyhydroxyaromaten (a1) und einer ungesättigten Verbindung (a2), die mindestens eine olefinische Doppelbindung trägt, durch Säurekatalyse herstellbar sind;
- die Polyamine (B) ausgewählt sind aus Aminen mit mindestens zwei primären aliphatischen Aminogruppen, Polyamidoaminen, Polyalkylenoxidpolyaminen und Epoxidharz-Amin-Addukten; und
- die Umsetzung so erfolgt, daß die Schmelze des alkylierten Polyhydroxyaromaten (A) bei 100 bis 140 °C von dem Polyamin (B) aufgenommen wird, und anschließend bei 70 bis 120 °C der Aldehyd (C) zugefügt wird.

2. Härtungskomponente gemäß Anspruch 1, dadurch gekennzeichnet, daß das Molverhältnis der Komponenten (a1) und (a2) 1,0 zu 0,1 bis 1,0 zu 3,0 beträgt.

3. Härtungskomponente gemäß Anspruch 1, dadurch gekennzeichnet, daß das Polyamin (B) mindestens zwei primäre Aminogruppen aufweist, wobei jede der primären Aminogruppen mit einem aliphatischen Kohlenstoffatom verbunden ist.

4. Härtungskomponente gemäß Anspruch 1, dadurch gekennzeichnet, daß der Aldehyd (C) Formaldehyd ist.

5. Härtungskomponente gemäß Anspruch 1, dadurch gekennzeichnet, daß der Polyhydroxyaromat (a1) Resorcin oder ein Novolak auf Basis von Resorcin und Formaldehyd ist.

6. Härtungskomponente gemäß Anspruch 5, dadurch gekennzeichnet, daß das Molverhältnis von Resorcin zu Formaldehyd in dem Novolak 2,0 zu 5,0 bis 2,0 zu 1,0 beträgt.

7. Härtungskomponente gemäß Anspruch 1, dadurch gekennzeichnet, daß die ungesättige Verbindung (a2) 2-Phenylpropen und/oder Styrol ist.

8. Härtungskomponente gemäß Anspruch 1, dadurch gekennzeichnet, daß das Molverhältnis der Komponenten (A), bezogen auf eingesetzte Mole Polyhydroxyaromat (a1), zu (B) 0,1 zu 2,0 bis 2,0 zu 1,0 beträgt.

9. Härtungskomponente gemäß Anspruch 1, dadurch gekennzeichnet, daß das Molverhältnis der Komponenten (B) zu (C) 1,0 zu 0,1 bis 1,0 zu 2,0 beträgt.

10. Härtungskomponente gemäß Anspruch 1, dadurch gekennzeichnet, daß das Polyamin (B) 1,3-Bis(aminomethyl)benzol ist oder ein Gemisch aus 1,3-Bis-(aminomethyl)benzol mit einem weiteren Polyamin.

11. Härtungskomponente gemäß Anspruch 1, dadurch gekennzeichnet, daß sie zusätzlich primäre aliphatische Monoamine enthält.

12. Verwendung der Härtungskomponente gemäß Anspruch 1 zur Herstellung von härtbaren Mischungen.

13. Verwendung der Härtungskomponente gemäß Anspruch 1 in Lackzubereitungen.

14. Härtbare Mischungen, enthaltend eine Härtungskomponente gemäß Anspruch 1, ein Epoxidharz, gegebenenfalls ein Verdünnungsmittel sowie gegebenenfalls übliche Zusatzstoffe.

## Claims

1. A curing component containing amino groups for epoxy resins, which is obtainable by reaction of alkylated polyhydroxy aromatics (A) with polyamines (B) and aldehydes (C) by the mechanism of the Mannich reaction, wherein
- the alkylated polyhydroxy aromatics (A) have at least two hydroxyl groups each connected to an aromatic ring and are preparable by acid catalysis from a corresponding polyhydroxy aromatic (al) and an unsaturated compound (a2) which carries at least one olefinic double bond;
- the polyamines (B) are selected from amines having at least two primary aliphatic amino groups, polyamidoamines, polyalkylene oxide polyamines and epoxy resin-amine adducts; and
- the reaction takes place such that the melt of the alkylated polyhydroxy aromatic (A) is taken up at from 100 to 140°C by the polyamine (B), and subsequently, at from 70 to 120°C, the aldehyde (C) is added.

2. A curing component as claimed in claim 1, wherein the molar ratio of components (al) and (a2) is 1.0 : 0.1 to 1.0 : 3.0.

3. A curing component as claimed in claim 1, wherein the polyamine (B) contains at least two primary amino groups, each of the primary amino groups being connected to an aliphatic carbon atom.

4. A curing component as claimed in claim 1, wherein the aldehyde (C) is formaldehyde.

5. A curing component as claimed in claim 1, wherein the polyhydroxy aromatic (a1) is resorcinol or a novolak based on resorcinol and formaldehyde.

6. A curing component as claimed in claim 5, wherein the molar ratio of resorcinol to formaldehyde in the novolak is 2.0 : 5.0 to 2.0 : 1.0.

7. A curing component as claimed in claim 1, wherein the unsaturated compound (a2) is 2-phenylpropene and/or styrene.

8. A curing component as claimed in claim 1, wherein the molar ratio of components (A), based on moles of polyhydroxy aromatic (a1) employed, to (B) is 0.1 : 2.0 to 2.0 : 1.0.

9. A curing component as claimed in claim 1, wherein the molar ratio of components (B) to (C) is 1.0 : 0.1 to 1.0 : 2.0.

10. A curing component as claimed in claim 1, wherein the polyamine (B) is 1,3-bis(aminomethyl)benzene or a mixture of 1,3-bis(aminomethyl)benzene with another polyamine.

11. A curing component as claimed in claim 1, which additionally comprises primary aliphatic monoamines.

12. The use of a curing component as claimed in claim 1 for the preparation of curable mixtures.

13. The use of a curing component as claimed in claim 1 in paint formulations.

14. A curable mixture comprising a curing component as claimed in claim 1, an epoxy resin, if appropriate a diluent and if appropriate customary additives.

## Revendications

1. Agent de durcissement contenant des groupes amino pour des résines époxydes, obtenu par action de composés polyhydroxyaromatiques alkylés (A) sur des polyamines (B) et des aldéhydes (C) selon le mécanisme de la réaction de Mannich, caractérisé en ce que
- les composés polyhydroxyaromatiques alkylés (A) qui présentent au moins deux groupes hydroxyle, chacun étant lié à un cycle aromatique, peuvent être préparés par catalyse acide à partir d'un composé polyhydroxyaromatique (a1) correspondant et d'un composé insaturé (a2), qui porte au moins une double liaison oléfinique ;
- les polyamines (B) sont pris parmi des amines avec au moins deux groupes amino aliphatiques primaires, des polyamidoamines, des polyoxyalkylène amines et des adduits de résines époxydeamine ; et
- la réaction est mise en oeuvre de façon telle que la matière fondue du composé polyhydroxyaromatique alkylé (A) soit reprise à une température de 100 à 140°C par la polyamine (B) et l'aldéhyde (C) soit ajouté ensuite à une température de 70 à 120°C.

2. Agent de durcissement selon la revendication 1, caractérisé en ce que le rapport molaire des constituants (a1) et (a2) est de 1,0:0,1 à 1,0:3,0.

3. Agent de durcissement selon la revendication 1, caractérisé en ce que la polyamine (B) présente au moins deux groupes amino primaires, chacun des groupes amino primaires étant relié à un atome de carbone aliphatique.

4. Agent de durcissement selon la revendication 1, caractérisé en ce que l'aldéhyde (C) est le formaldéhyde.

5. Agent de durcissement selon la revendication 1, caractérisé en ce que le composé polyhydroxyaromatique (a1) est la résorcine ou une novolaque à base de résorcine et de formaldéhyde.

6. Agent de durcissement selon la revendication 5, caractérisé en ce que le rapport molaire de la résorcine au formaldéhyde dans la novolaque est de 2,0:5,0 à 2,0:1,0.

7. Agent de durcissement selon la revendication 1, caractérisé en ce que le composé insaturé (a2) est le 2-phénylpropène et/ou le styrène.

8. Agent de durcissement selon la revendication 1, caractérisé en ce que le rapport molaire du constituant (A), par rapport aux moles de composé polyhydroxyaromatique (a1) utilisés, au constituant (B) est de 0,1:2,0 à 2,0:1,0.

9. Agent de durcissement selon la revendication 1, caractérisé en ce que le rapport molaire du constituant (B) au constituant (C) est de 1,0:0,1 à 1,0:2,0.

10. Agent de durcissement selon la revendication 1, caractérisé en ce que la polyamine (B) est le 1,3-bis-(aminométhyl)benzène ou un mélange de 1,3-bis-(aminométhyl)benzène et d'une autre polyamine.

11. Agent de durcissement selon la revendication 1, caractérisé en ce qu'il contient de plus des monoamines aliphatiques primaires.

12. Utilisation de l'agent de durcissement selon la revendication 1 pour la préparation de mélanges durcissables.

13. Utilisation de l'agent de durcissement selon la revendication 1 dans des préparations de vernis.

14. Mélanges durcissables contenant un agent de durcissement selon la revendication 1, une résine époxyde, éventuellement un diluant ainsi que, éventuellement, des matières d'addition usuelles.
